# EUROPÄISCHE PATENTSCHRIFT

(11) **EP 4 096 871 B1**
(45) Veröffentlichungstag und Bekanntmachung des Hinweises auf die Patenterteilung: **18.06.2025**
(21) Anmeldenummer: 21703369.5
(22) Anmeldetag: 21.01.2021
(51) Int. Cl.: B25F 5/00, H02J 7/00, H01M 10/42, H01M 10/44, H01M 10/46, H01M 10/48

(54) **HANDWERKZEUGMASCHINE UND AKKUPACK FÜR EINE HANDWERKZEUGMASCHINE**
HAND-HELD POWER TOOL AND RECHARGEABLE BATTERY PACK FOR A HAND-HELD POWER TOOL
OUTIL ÉLECTRIQUE PORTATIF ET BLOC-BATTERIE RECHARGEABLE POUR OUTIL ÉLECTRIQUE PORTATIF

(30) Priorität: 30.01.2020 DE 102020201116
(43) Veröffentlichungstag der Anmeldung: 07.12.2022
(73) Patentinhaber: Robert Bosch GmbH, 70442 Stuttgart (DE)
(72) Erfinder: KLEE, Christoph, 70599 Stuttgart (DE); WERNERUS, Holger, 70794 Filderstadt (DE)
(86) Internationale Anmeldenummer: PCT/EP2021/051315
(87) Internationale Veröffentlichungsnummer: WO 2021/151773

(56) Entgegenhaltungen:
- EP-A2- 1 637 897
- DE-A1- 102016 209 822
- DE-A1- 102018 206 885
- US-A- 5 184 059
- US-A1- 2018 321 324

## Beschreibung

### Offenbarung der Erfindung

Die vorliegende Erfindung betrifft ein Akkupack für eine Handwerkzeugmaschine nach Anspruch 1 sowie eine Handwerkzeugmaschine nach Anspruch 12 und ein Ladegerät nach Anspruch 14.

Elektrische Handwerkzeugmaschinen sind grundsätzlich bekannt und werden über einen Netzanschluss mit Strom versorgt. Alternativ ermöglichen Akkugeräte eine hohe Flexibilität beim Arbeiten, da sie insbesondere unabhängig von Netzstrom sind. Auf diese Weise können beispielsweise auch Außenarbeiten bequem durchgeführt werden, so dass bei einem Betrieb einer Handwerkzeugmaschine vielfach vorgesehen ist, Akkupacks einzusetzen.

Derartige Akkupacks, siehe zum Beispiel EP 1 637 897 A2, sind grundsätzlich bekannt und weisen in der Regel eine Mehrzahl von in Parallel- und/oder Reihenschaltung verbundener wiederaufladbare Akkumulatoren, beispielsweise drei in Reihe geschaltete, zylinderförmige Li-Ionen-Zellen mit z.B. je 3,6 V mit einer Gesamtspannung von 10,8 V, auf. Die verbundenen Akkuzellen müssen zum einen mit einer Akkupackelektronik und zum anderen untereinander verbunden werden. Das Akkupack umfasst in der Regel ein Akkupackgehäuse in denen die Akkuzellen vorzugsweise mittels eines Zellhalters entweder vollständig oder teilweise aufgenommen sind. Alternativ bildet der Zellhalter selber ein Akkupackgehäuseelement des Akkupackgehäuses aus.

Im Rahmen dieser Anmeldung ist unter einem Akkupack somit ein vorzugsweise aus mehreren elektrisch zusammengeschalteten Akkuzellen bestehendes Akkumulatorenpaket zu verstehen, das elektrische Energie speichern kann, die für den Betrieb einer Handwerkzeugmaschine benötigte Energie liefert, und austauschbar in einer Kammer, einer Schnittstelle oder dergleichen der Handwerkzeugmaschine anbringbar ist. Insbesondere soll unter einer Schnittstelle eine Vorrichtung verstanden werden, die dazu vorgesehen ist, eine elektrische und unter, sofern erforderlich, eine mechanische Verbindung mit einem Ladegerät und/oder einer Entladeseite, also der Handwerkzeugmaschine direkt oder indirekt herzustellen.

Das Ankoppeln des Akkupacks an die Handwerkzeugmaschine erfolgt durch Einstecken beziehungsweise Einschieben der Schnittstelle des Akkupacks in eine komplementäre Einsteckbuchse oder Schnittstelle des Gerätegehäuses. Die Schnittstelle weist Kontaktschlitze auf, in denen Kontaktelemente angeordnet sein können. Ist die Energie des Akkupacks verbraucht, so kann er entnommen und mit einer Ladestation mit entsprechenden Gegenkontaktelementen verbunden werden. Stehen mehrere Akkupacks zur Verfügung, so ist es möglich, das entladene Akkupack aus der Handwerkzeugmaschine zu entnehmen und gegen ein geladenes auszutauschen. Dabei bestimmen in der Regel die Nennspannung und Kapazität des jeweils verwendeten Akkupacks die Leistung und Laufzeit der Handwerkzeugmaschinen. Daher ist wichtig, dass Werkzeug und Ladegerät über Informationen über den Akkupack verfügen, beispielsweise den maximalen Lade- und Entladestrom, sowie die aktuelle Betriebstemperatur und den Innenwiderstand des Akkupacks.

Aus dem Stand der Technik ist bekannt, dass verschiedene Handwerkzeugmaschinen einer Spannungsklasse untereinander nicht kompatible Akkupacks aufweisen, wohingegen die Akkupacks von verschiedenen Handwerkzeugmaschinen innerhalb einer Volt-Klasse, beispielweise einem Stabschrauber, einem Acku-Bohrer, einer Schlagbohrmaschinen, einer Stichsägen, einem Multifunktionswerkzeug und/oder einem Bohrschrauber, oftmals kompatibel sind.

Ferner ist bekannt, dass sich Akkupacks mit Hilfe einer Kodierung gegenüber dem Ladegerät und der Handwerkzeugmaschine identifizieren können, so dass andere, nicht für die Handwerkzeugmaschine vorgesehene Akkupacks, z. B. solche mit einer anderen Nennspannung, seitens der Handwerkzeugmaschine nicht akzeptiert werden, damit der Akkupack und/oder die Handwerkzeugmaschine keinen Schaden nehmen. In anderen Fällen dient die Informationsübertragung zur Optimierung des Zusammenwirkens von Akkupack und Handwerkzeugmaschine beziehungsweise Ladegerät.

Im Stand der Technik wird dies beispielsweise durch in der Schnittstelle des Ackupacks angeordnete Signalkontaktelemente erreicht, über die akkupackspezifische Informationen an korrespondierende Kontaktelemente der Handwerkzeugmaschine und/oder des Ladegeräts übertragen werden können. In einigen Fällen ist auch ein Informationsaustausch zwischen Akkupack und Handwerkzeugmaschine und/oder Ladegerät möglich, d.h. Informationen können in beide Richtungen übertragen werden.

Die Signalkontaktelemente sind im Stand der Technik akkupackseitig in der Regel mit Kodierelementen, beispielsweise Kodierwiderständen, verbunden. In den korrespondierenden Gegenkontaktelementen der Handwerkzeugmaschine und/oder des Ladegerätes ist typischerweise ein Pull-up Widerstand angeordnet, über den der akkupackseitige Kodierwiderstand mit Spannung versorgt wird. Eine Messschaltung in der Handwerkzeugmaschine beziehungsweise im Ladegerät ermittelt dann den mit dem Signalkontaktelement verbundenen Widerstand, der durch eine entsprechende Steuerung der Handwerkzeugmaschine beziehungsweise des Ladegerätes als akkupackspezifische Information interpretiert wird.

Parallel zum Kodierwiderstand wird in der Akkupackelektronik häufig beispielsweise ein Kondensator oder eine Diode als Schutz gegen elektrostatische Entladung (ESD) geschaltet.

Grundsätzlich erweist es sich in diesem Zusammenhang als nachteilig, dass nach der oben beschriebenen Methode der Kodierelemente lediglich eine begrenzte Anzahl an Informationen durch ein Kodierelement übertragen werden kann, da sowohl die Akkupacks als auch die Handwerkzeugmaschinen und Ladegeräte, und damit die jeweiligen Schnittstellen, einer steten Weiterentwicklung unterliegen, was es oftmals erforderlich macht, zusätzliche Kontaktelemente und Gegenkontaktelemente in den Schnittstellen zu implementieren, um zusätzliche Informationen zwischen den Geräten auszutauschen. Aus Gründen der Handlichkeit und Handhabbarkeit sowohl des Akkupacks als auch der Handwerkzeugmaschine, ist es jedoch erwünscht, den für die Schnittstelle benötigten Bauraum so kompakt wie möglich zu halten. Darüber hinaus ergibt sich aus Gründen der Kompatibilität zu Vorgängermodellen gegebenenfalls die Forderung, die Geometrie der Schnittstelle gegenüber einem Vorgängermodell so wenig wie möglich zu ändern.

Aufgabe der Erfindung ist es, die oben genannten Nachteile zu verbessern und ein verbessertes Akkupack der eingangs genannten Art bereitzustellen, das bei einer Vielzahl von verschiedenen Handwerkzeugmaschinen einsetzbar ist, wobei möglichst viele Informationen über eine möglichst kompakte Akkupackschnittstelle übertragen werden sollen, bei voller Kompatibilität mit Handwerkzeugmaschinen älterer Baureihen. Dabei soll weder die Erkennung des korrekten Kodierelements, noch etwaige digitale Kommunikation über die gleiche Leitung eingeschränkt werden.

Es ist eine weitere Aufgabe der Erfindung, eine korrespondierende Handwerkzeugmaschine und ein korrespondierendes Ladegerät anzugeben, die bei voller Kompatibilität mit herkömmlichen Akkupacks möglichst viele Informationen aus dem Akkupack auslesen können.

Diese Aufgaben werden durch ein Akkupack gemäß Anspruch 1 gelöst sowie durch eine Handwerkzeugmaschine gemäß Anspruch 13 und ein Ladegerät nach Anspruch 15. Vorteilhafte Ausgestaltungen, Varianten und Weiterbildungen der Erfindung sind den Unteransprüchen zu entnehmen.

Ein erfindungsgemäßes Akkupack für eine Handwerkzeugmaschine weist auf wenigstens eine Schnittstelle zum Herstellen einer elektrischen Verbindung des Akkupacks mit einer Handwerkzeugmaschine und/oder einem Ladegerät,
wobei die Schnittstelle Kontaktelemente zur elektrischen Kontaktierung korrespondierender Gegenkontaktelemente an der Handwerkzeugmaschine und/oder korrespondierender Gegenkontaktelemente an dem Ladegerät aufweist,
wobei zumindest ein Kontaktelement ein Signalkontaktelement ist, welches mit zumindest einem Kodierelement des Akkupacks elektrisch verbunden ist;
eine Akkupackelektronik,
wobei die Akkupackelektronik dazu ausgelegt ist, Informationen bezüglich des Akkupacks über das zumindest eine Signalkontaktelement bereitzustellen, wobei die Informationen bezüglich des Akkupacks zumindest teilweise in dem zumindest einem Kodierelement hinterlegt sind; und wobei in der Akkupackelektronik das zumindest eine Kodierelement in einer elektrischen Parallelschaltung parallel zu einem dynamischen Strompfad verschaltet ist.

Unter einem dynamischen Strompfad wird im Rahmen der Anmeldung ein Strompfad verstanden, der hinsichtlich bestimmter elektrischer Eigenschaften, insbesondere hinsichtlich einer an dem Strompfad anliegenden Spannung, und/oder einer durch den Strompfad fließenden Stromstärke, zeitlich veränderlich, also variabel ist. Im Rahmen dieser Anmeldung wird diese Charakteristik des dynamischen Strompfades auch als Zeitverhalten bezeichnet.

Der Fachmann wird erkennen, dass diese Dynamik, oder dieses Zeitverhalten, eines parallel zum Kodierelement geschalteten Strompfades die Möglichkeit bietet, zusätzlich zum Kodierwiderstand zumindest eine weitere 1-Bit-Information über das Signalkontaktelement zu kodieren und an die Handwerkzeugmaschine und/oder das Ladegerät zu übergeben, wodurch die Anordnung eines weiteren Signalkontaktelements zur Übermittlung dieser zusätzlichen Information überflüssig ist. Dies ist dadurch möglich, dass eine Steuerung der Handwerkzeugmaschine beziehungsweise des Ladegerätes die Dynamik erkennt und entsprechend interpretiert.

Vorteilhafterweise wird dieses Zeitverhalten elektrisch vorteilhaft abgestimmt, sodass die für eine digitale Kommunikation zwischen Akkupack und Handwerkzeugmaschine beziehungsweise Ladegerät benötigte Dynamik höchstens auf nicht signifikante Art und Weise verändert wird. Konkret wird sichergestellt, dass notwendige Schaltschwellen zeitlich nicht signifikant beeinflusst werden. Dadurch wird gewährleistet, dass keinerlei Funktionsbeeinträchtigung vorliegt, gleichzeitig jedoch mindestens eine weitere Information über die Kodierschnittstelle analog übertragen werden kann.

In einer Ausführungsform ist die Akkupackelektronik dazu eingerichtet, eine Versorgungsspannung über einen Vorwiderstand in einer Handwerkzeugmaschine oder in einem Ladegerät an das zumindest eine Kodierelement weiterzugeben, wobei der dynamische Strompfad dazu eingerichtet ist, einen zeitlichen Verlauf einer Messspannung über dem Kodierelement zu beeinflussen. In dieser Ausführungsform wird das Vorhandensein des beschriebenen Zeitverhaltens zum Beispiel über einen Microcontroller auf Seite der Handwerkzeugmaschine oder des Ladegerätes gemessen, indem ein Spannungsverlauf am Kodierelement während und nach des Ladevorgangs der Schaltung gemessen wird. Darüber lassen sich beliebige 1-Bit-Informationen kodieren. Für erhöhte Informationstiefe kann beispielsweise die Ausprägung des beschriebenen Zeitverhaltens bewertet werden.

Vorteilhafterweise ist der dynamische Strompfad dazu eingerichtet, den zeitlichen Verlauf der Messspannung über dem zumindest einen Kodierelement nur innerhalb eines definierten Zeitraumes nach dem Anlegen der Versorgungsspannung aus der korrespondierenden Handwerkzeugmaschine und/oder dem korrespondierenden Ladegerät zu beeinflussen, wobei der definierte Zeitraum bevorzugterweise zwischen 0ms und 10ms liegt, besonders bevorzugterweise zwischen 0ms und 1ms. Auf diese Weise kann im konkreten Fall erreicht werden, dass das Zeitverhalten elektrisch vorteilhaft abgestimmt ist, sodass es während der statischen Erkennung des Kodierelements bereits einen Endwert erreicht hat, beispielsweise in der Art, dass ein Endwert einer durch den dynamischen Strompfad erzeugten Spannungsdifferenz am Signalkontaktelement bei ca. Null Volt liegt. Mit anderen Worten entspricht nach Abschluss des Zeitverhaltens die Spannung am Kodierelement derjenigen Spannung, die auch ohne parallel zum Kodierelement geschalteten dynamischen Strompfad vorliegen würde.

Bevorzugterweise sind in der Akkupackelektronik das Signalkontaktelement und der dynamische Strompfad in einer elektrischen Parallelschaltung zwischen einem gemeinsamen Masseanschluss und dem Signalkontaktelement geschaltet.

In einer bevorzugten Ausführungsform wird die zeitliche Dynamik dadurch erreicht, dass der dynamische Strompfad zumindest einen ersten Kondensator und einen ersten Widerstand in Serienschaltung umfasst. Dabei können der erste Kondensator und der erste Widerstand in dem Fachmann an sich bekannter Weise in einer R-C-Serienschaltung oder in einer C-R-Serienschaltung angeordnet sein. Die Dynamik des dynamischen Strompfades wird hierbei dadurch erzeugt, dass sich der erste Kondensator bei Anlegen einer Gleichstrom-Versorgungsspannung beispielsweise über einen in der Schnittstelle der Handwerkzeugmaschine oder des Ladegerätes angeordneten Pull-up Widerstand innerhalb einer definierten Zeit auflädt und während des Aufladens in an sich bekannter Weise die an dem ersten Widerstand anliegende Spannung reduziert, bis der Strom bei voller Aufladung des ersten Kondensators gleich Null ist. Die über den ersten Widerstand anliegende Spannung ist dann ebenfalls gleich Null.

In einer konkreten Ausführungsform wird eine Kapazität Cx des zumindest einen ersten Kondensators und ein Widerstandswert Rx des zumindest einen ersten Widerstands derart gewählt, dass eine Zeitkonstante τ = Rx*Cx des ersten Kondensators einen Wert von τ <10ms, bevorzugterweise τ <1ms hat.

In einer Ausführungsform der Erfindung umfasst der dynamische Strompfad zwei oder mehr in einer Parallel- und/oder Reihenschaltung verbundene erste Kondensatoren und/oder zwei oder mehr in einer Parallel- und/oder Reihenschaltung verbundene erste Widerstände.

In einer weiteren Ausführungsform weist der dynamische Strompfad für einen Akkupack oder Akkupack-Typ einen definierten Kapazitätswert Cx und/oder einen definierten Widerstandswert Rx auf, der bei Anlegen einer Versorgungsspannung (Vcc) aus einer Handwerkzeugsmaschine oder Ladegerät an dem Signalkontaktelement ein definiertes Zeitverhalten in der Messspannung über dem Kodierelement erzeugt, wobei dieses Zeitverhalten unterscheidbar ist von demjenigen Zeitverhalten anderer Akkupacks oder Akkupack-Typen, die beispielsweise keinen oder einen anders gearteten dynamischen Strompfad aufweisen.

Auf diese Weise lassen sich im zeitlichen Verlauf theoretisch beliebig viele verschiedene Kapazitätswerte Cx und/oder Widerstandswerte Rx unterscheiden, um beispielsweise eine 8-Bit-Kodierung erreichen.

In einer weiteren Ausführungsform umfasst die Akkupackelektronik zwei oder mehr dynamische Strompfade, wobei jeder der zwei oder mehr dynamischen Strompfade in einer elektrischen Parallelschaltung parallel zu dem zumindest einen Kodierelement verschaltet ist, und wobei jeder der zwei oder mehr dynamischen Strompfade zumindest einen ersten Widerstand mit Widerstandswert Rx,i und zumindest einen ersten Kondensator mit Kapazität Cx,i in Serienschaltung aufweist, wobei jede Kombination der zwei oder mehr dynamischen Strompfade innerhalb zu unterscheidender Akkupacks ein unterscheidbares Zeitverhalten an der Schnittstelle zu dem Handwerkzeug und/oder dem Ladegerät erzeugt. Wie in der vorstehend diskutierten Ausführungsform kann auf diese Weise eine grundsätzlich beliebige Anzahl an Bits kodieren.

Entsprechend der Erfindung ist es vorgesehen, dass die Akkupackelektronik zwei oder mehr dynamische Strompfade umfasst, wobei jeder der zwei oder mehr dynamischen Strompfade in einer elektrischen Parallelschaltung parallel zu dem zumindest einen Kodierelement verschaltet ist, und wobei jeder der zwei oder mehr dynamischen Strompfade hinsichtlich seiner elektrischen Komponenten und seiner Verschaltung analog zu dem ersten dynamischen Strompfad aufgebaut ist.

In einer Ausführungsform der Erfindung ist ein Schutzkondensator oder eine Schutzdiode in einer elektrischen Parallelschaltung parallel zu dem zumindest einen Kodierelement geschaltet. Dies ermöglicht es, die Schaltung gegen elektrostatische Entladung zu schützen.

Bevorzugterweise ist das zumindest eine Kodierelement ein Kodierwiderstand, besonders bevorzugterweise ein ohmscher Widerstand. Der ohmsche Widerstandswert des ohmschen Widerstands kann in dieser Ausführungsform als Kodierwert des zumindest einen ersten Kodierelements herangezogen werden.

Gemäß einem weiteren Aspekt umfasst die vorliegende Erfindung eine Handwerkzeugmaschine, umfassend ein wie vorstehend beschriebenes Akkupack, eine Schnittstelle zur elektrischen Kopplung des Akkupacks mit der Handwerkzeugmaschine, umfassend zumindest ein mit dem Signalkontaktelement des Akkupacks korrespondierendes Signalgegenkontaktelement; und eine Steuerungseinheit, wobei die Steuerungseinheit dazu ausgebildet ist, Informationen bezüglich des Akkupacks über das zumindest eine Signalgegenkontaktelement zu empfangen; wobei die Steuerungseinheit dazu ausgebildet ist, einen zeitlichen Verlauf einer an dem zumindest einen Signalgegenkontaktelement anliegenden Messspannung zu erfassen und auszuwerten.

Ebenso umfasst die vorliegende Erfindung ein Ladegerät zum Aufladen eines vorstehend beschriebenen Akkupacks, das Ladegerät umfassend eine Schnittstelle zur elektrischen Kopplung des Ladegeräts mit dem Akkupack, umfassend zumindest ein mit dem Signalkontaktelement des Akkupacks korrespondierendes Ladegegenkontaktelement; und eine Steuerungseinheit, wobei die Steuerungseinheit dazu ausgebildet ist, Informationen bezüglich des Akkupacks über das zumindest eine Ladegegenkontaktelement zu empfangen; wobei die Steuerungseinheit dazu ausgebildet ist, einen zeitlichen Verlauf einer an dem zumindest einen Ladegegenkontaktelement anliegenden Messspannung zu erfassen und auszuwerten.

Die erfindungsgemäße Handwerkzeugmaschine und das erfindungsgemäße Ladegerät sind in der Lage, im Vergleich zum Stand der Technik mit einfachem Kodierelement zumindest eine weitere Informationen auszulesen, bei entsprechender Ausführung des Akkupacks gemäß vorstehender Beschreibungen zur Erzeugung mehrerer unterscheidbarer Zeitverläufe sogar entsprechend mehr Informationen.

Dabei kann vorgesehen sein, dass auf Seite der Handwerkzeugmaschine beziehungsweise des Ladegeräts ein Pull-up Widerstand mit dem zumindest einen Signalgegenkontaktelement beziehungsweise dem zumindest einen Ladegegenkontaktelement elektrisch verbunden ist.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden mit Bezug auf die beigefügten Figuren genauer beschrieben, wobei für gleiche Merkmale gleiche Bezugszeichen verwendet werden. Die Zeichnungen sind schematisch und zeigen:
- Fig. 1: beispielhaft eine Ansicht einer Handwerkzeugmaschine mit einem erfindungsgemäßen Akkupack;
- Fig. 2: eine perspektivische Explosionsdarstellung einer Ausführungsform eines erfindungsgemäßen Akkupacks;
- Fig. 3: eine schematische Darstellung eines elektrischen Kontaktes zwischen einem akkupackseitigen Signalkontaktelement und einem maschinenseitigen Gegensignalkontaktelement gemäß des Stands der Technik;
- Fig. 4: eine schematische Darstellung eines elektrischen Kontaktes zwischen einem akkupackseitigen Signalkontaktelement und einem maschinenseitigen Gegensignalkontaktelement gemäß einer Ausführungsform der vorliegenden Erfindung, zu unterschiedlichen Zeitpunkten;
- Fig. 5: eine schematische Darstellung eines elektrischen Kontaktes zwischen einem akkupackseitigen Signalkontaktelement und einem maschinenseitigen Gegensignalkontaktelement gemäß einer Ausführungsform der vorliegenden Erfindung, zu unterschiedlichen Zeitpunkten; und
- Fig. 6: eine Darstellung eines gemessenen Spannungsverlaufs an einem Signalkontaktelement gemäß einer Ausführungsform der vorliegenden Erfindung.

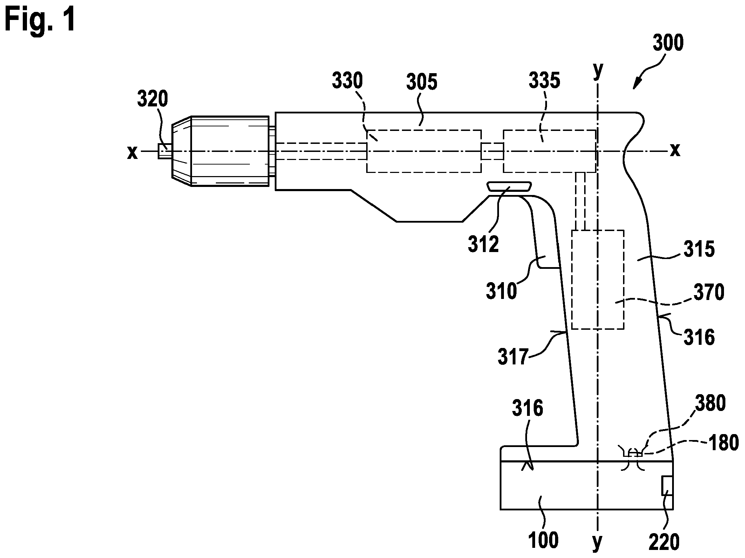

Die Figur 1 zeigt ein als Handwerkzeugmaschine 300 ausgebildetes Elektrogerät, welches beispielhaft als Akku-Bohrschrauber ausgebildet ist. Entsprechend ist die Handwerkzeugmaschine 300 in der dargestellten Ausführungsform zur netzunabhängigen Stromversorgung mechanisch und elektrisch mit einem Akkupack 100 verbunden. Es wird jedoch darauf hingewiesen, dass die vorliegende Erfindung nicht auf Akku-Bohrschrauber beschränkt ist, sondern vielmehr bei unterschiedlichen Handwerkzeugmaschinen 300 Anwendung finden kann. Die Handwerkzeugmaschine 300 weist ein in einem Gehäuse 305 angeordnetes Getriebe 330 zur Übertragung eines von einem Antriebsmotor 335 erzeugten Drehmomentes auf eine um eine Achse x rotierende Antriebswelle, an welcher eine Werkzeugaufnahme 320 für ein nicht dargestelltes Werkzeug befestigt ist, und einen Handgriff 315 auf. Innerhalb des Gehäuses 305 ist eine Elektronik 370 angeordnet, welche in elektronischem und/oder mechanischem Kontakt mit dem Antriebsmotor 335 und/oder dem Getriebe 330 steht. Der Handgriff 315 dient als Auflagefläche für eine Hand eines Bedieners der Handwerkzeugmaschine 300 und weist in der Regel eine Längsachse y, eine Vorderseite 317, die entlang einer Achse x in Richtung der Werkzeugaufnahme 320 zeigt, eine Rückseite 316, und zwei Seitenflächen 318 auf.

Im Bereich des Handgriffes 315 ist ein erstes Bedienelement 310 für die Energieversorgung des Antriebsmotors 335 angeordnet, wobei das erste Bedienelement 310 aus dem Gehäuse 305 für den Benutzer manuell zugänglich herausragt, so dass in einer an sich bekannten Art und Weise durch eine Druckbewegung des ersten Bedienelementes 310 eine Steuerung und/oder Regelung des Antriebsmotors bevorzugterweise in Abhängigkeit vom Verstellweg des ersten Bedienelementes 310 ermöglicht werden kann, und auch die Spannungsversorgung für den Antriebsmotor 335 ein- und/oder ausgeschaltet werden kann. Ferner weist die Handwerkzeugmaschine 300 ein zweites Bedienelement 312 in Form eines Schiebeschalters zum Einstellen der Drehrichtung des Antriebsmotors 335 der Handwerkzeugmaschine 300 auf. Das zweite Bedienelement 312 ist senkrecht zur Drehachse x der Antriebswelle, insbesondere der Werkzeugaufnahme 320 der Handwerkzeugmaschine 300, verschieblich angeordnet, so dass das zweite Bedienelement 312 bei Betätigung zwischen einer ersten Position, einer zweiten Position und einer dritten Position hin und her bewegt werden kann. Dabei legen jeweils die erste und zweite Position eine Drehrichtung des Antriebsmotors fest. Somit kann der Benutzer der Handwerkzeugmaschine 300 bereits anhand der Positionen des zweiten Bedienelements 312 erkennen, in welchem Arbeitsmodus die Handwerkzeugmaschine 300 arbeitet. Zusätzlich weist das zweite Schaltelement zwischen der ersten Position und der zweiten Position eine dritte Position, beispielsweise eine Mittelstellung, auf, wobei in der dritten Position eine elektrische, elektromechanische und/oder mechanische Unterbrechung des Motorstroms erfolgt. So kann zum Beispiel die Bedienung des ersten Schaltelementes 310 mechanisch gesperrt sein, wobei das zweite Bedienelement 312 bei Bewegung in eine dritte Position verriegelnd auf das erste Schaltelement 310 wirkt. Dabei kann das zweite Bedienelement 312 wie dargestellt als Schiebeschalter oder alternativ als Kippschalter ausgeführt sein.

Das erste Bedienelement 310 und das zweite Bedienelement 312 sind entlang der Drehachse x derart angeordnet, dass es möglich ist, sowohl das erste als auch das zweite Bedienelement 310, 312 mit dem Zeigefinger oder Mittelfinger zu betätigen. Dabei ist der Abstand zwischen dem ersten Bedienelement 310 und dem zweiten Bedienelement 312 so gewählt, dass eine Einhandbedienung der Handwerkzeugmaschine 300 möglich ist. Beide Bedienelemente 310, 312 sind ferner in einem Bereich unterhalb der Drehachse x angeordnet und ragen aus dem Gehäuse 305 heraus.

In der in der Figur 1 gezeigten Position ist das Akkupack 100 an dem Handgriff 315 der Handwerkzeugmaschine 300 befestigt und durch Verriegelungsmittel verriegelt. Durch die Anordnung des Akkupacks 100 unterhalb des Handgriffs 315 wird die Bedienung der Handwerkzeugmaschine 300 nicht gestört. Die nicht im Detail dargestellten Verriegelungsmittel umfassen unter anderem ein Verriegelungselement und ein Betätigungselement 220. Durch Betätigung des Betätigungsmittels 220 kann das Akkupack 100 von dem Handgriff 315 der Handwerkzeugmaschine 300 gelöst werden. Ferner weist die Handwerkzeugmaschine 300 eine Schnittstelle 380 auf.

Das in Figur 1 dargestellte Akkupack 100 ist als Schiebeakkupack ausgeführt, und weist eine zur Schnittstelle 380 der Handwerkzeugmaschine 300 korrespondierende Schnittstelle 180 auf. Alternativ zum Schiebeakkupack ist auch eine Ausführung als Dreh- oder Schwenkakkupack möglich, wobei das Akkupack 100 an der der Schwenkachse gegenüberliegenden Seite durch Verrasten, Verschrauben, Verklemmen oder Verspannen an dem Gehäuse 305 der Handwerkzeugmaschine 300 lösbar arretiert werden kann. Auf diese Weise kann wirksam einem möglichen Abfallen des Akkupacks vom Gehäuse 305 entgegengewirkt werden.

Zum lösbaren Anbringen des Akkupacks 100 an einer Handwerkzeugmaschine 300 oder an einem Ladegerät weist das Akkupack 100 eine Schnittstelle 180 zur lösbaren mechanischen und elektrischen Verbindung mit einer korrespondierenden Schnittstelle 380 der Handwerkzeugmaschine 300 oder einer korrespondierende Schnittstelle des Ladegerätes auf. Beim Anbringen des Akkupacks 100 werden Aufnahmemittel, z. B. Führungsnuten und Führungsrippen, der Handwerkzeugmaschine 300 oder des Ladegerätes zur Aufnahme der korrespondierenden Führungselemente des Akkupacks 100 mit diesen in Eingriff gebracht, wobei das Akkupack 100 entlang der Aufnahmemittel eingeführt und die Schnittstelle 180 des Akkupacks 100 in die korrespondierende Schnittstelle 380 der Handwerkzeugmaschine 300 oder die korrespondierende Schnittstelle des Ladegerätes geschoben wird. Über die mechanische Ausbildung der Schnittstellen 180, 380 kann das Akkupack 100 der Handwerkzeugmaschine 300 und/oder dem Ladegerät zugeordnet werden.

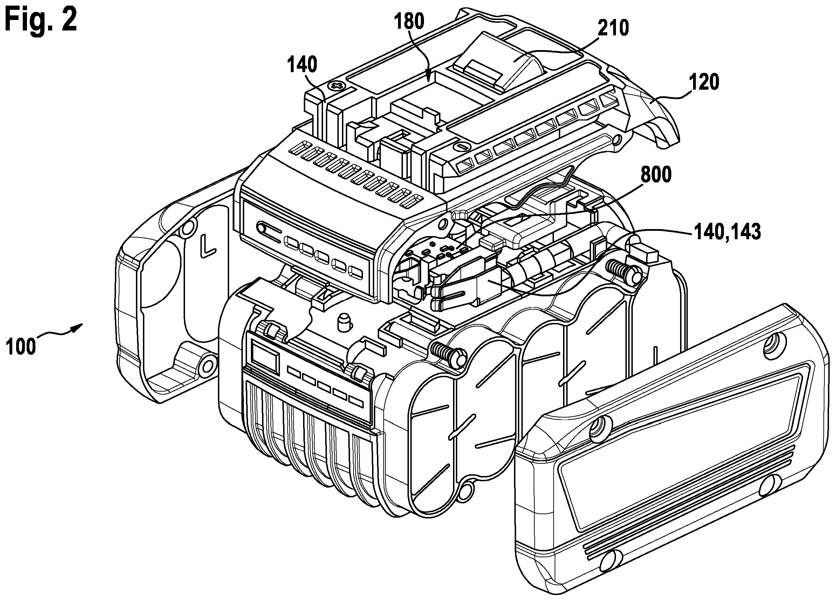

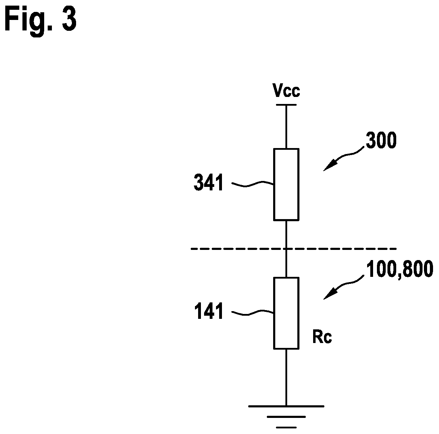

Der Einfachheit halber wird in den folgenden Ausführungen zu den Figuren 2 bis 5 von einer Handwerkzeugmaschine 300 als mit dem Akkupack verbundenes Gerät die Rede sein, und es wird nicht jedes Mal erwähnt, dass es sich bei dem mit dem Akkupack 100 verbundenen Gerät auch um eine Ladegerät 700 handeln kann. Die Ausführungen zu den Figuren 3 bis 5 gelten jedoch analog für eine Anordnung des Akkupacks 100 an einem Ladegerät 700.

Zum Verriegeln des Akkupacks 100 am Handgriff 315 der Handwerkzeugmaschine 300 wird das Akkupack 100 entlang des Handgriffs 315 geschoben, und zwar entlang einer unteren, im Wesentlichen senkrecht zur Längsrichtung y des Handgriffs 315 ausgerichteten Außenfläche des Handgriffs 315. In der in der Figur 1 gezeigten Position ist das Akkupack 100 durch Verriegelungsmittel am Handgriff 315 verriegelt. Die Verriegelungsmittel umfassen unter anderem ein in Figur 2 dargestelltes Verriegelungselement 210 und ein Betätigungsmittel. Durch Betätigung des Betätigungsmittels kann das Akkupack 100 von dem Handgriff 315 der Handwerkzeugmaschine 300 gelöst werden. Nach Entriegelung des Ackupacks 100 kann dieses vom Handgriff 315 getrennt werden. Beim Anbringen des Akkupacks 100 an einer Handwerkzeugmaschine 300 wird das Verriegelungselement 210 in Eingriff mit einer nicht näher gezeigten korrespondierenden Aufnahme im Handgriff 315 der Handwerkzeugmaschine 300 gebracht.

Wie in der Explosionsdarstellung der Figur 2 erkennbar, umfasst die Schnittstelle 180 außerdem Kontaktelemente 140 zur elektrischen Kontaktierung des Akkupacks 100 mit der Handwerkzeugmaschine 300 oder dem Ladegerät. Die Kontaktelemente 140 umfassen sowohl Spannungskontaktelemente, die als Lade- und/oder Entladekontaktelemente dienen, als auch Signalkontaktelemente, die eine Signalübertragung vom Akkupack 100 zu der Handwerkzeugmaschine 300 und/oder von der Handwerkzeugmaschine 300 zum Akkupack 100 ermöglichen, wobei ''Signalübertragung'' hier als Übertragung von Informationen verstanden werden soll, die im einfachsten Fall eine 1-Bit-Information wie ''0'' oder ''1'' ist, aber auch beispielsweise ein Wert einer Spannung oder eines Widerstands sein kann.

Wie eingangs beschrieben, sind bestimmte Signalkontaktelemente akkupackseitig mit Kodierelementen, beispielsweise Kodierwiderständen, verbunden, die eine Information für die Handwerkzeugmaschine 300 oder das Ladegerät verschlüsseln, beispielsweise den maximalen Lade- und Entladestrom, die aktuelle Betriebstemperatur und den Innenwiderstand des Akkupacks. In den korrespondierenden Gegenkontaktelementen der Handwerkzeugmaschine und/oder des Ladegerätes ist typischerweise ein Pull-up Widerstand angeordnet, über den der akkupackseitige Kodierwiderstand mit Spannung versorgt wird.

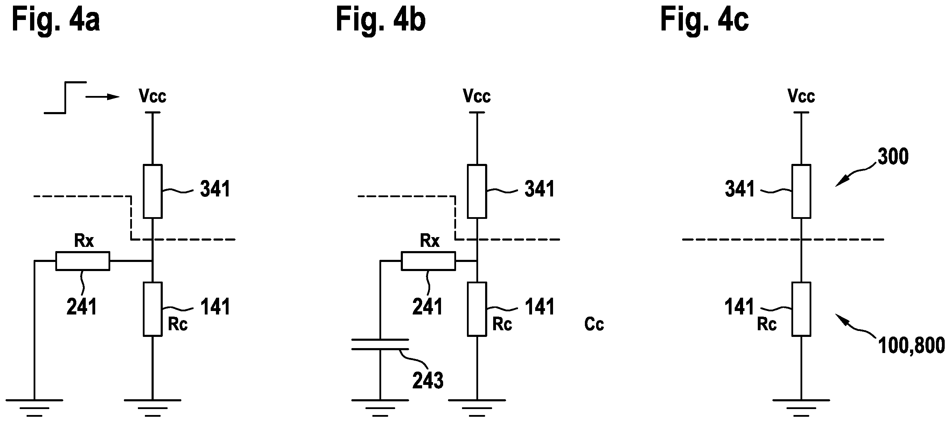

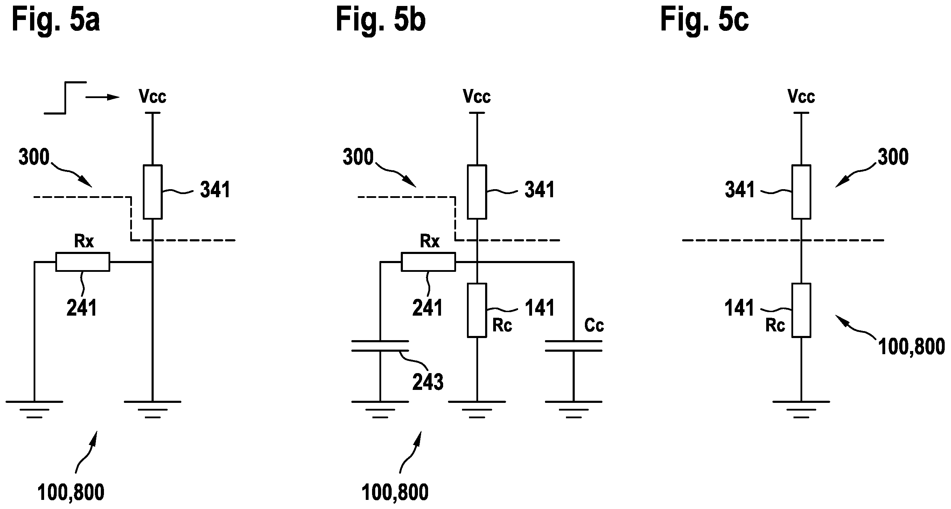

Ein vereinfachtes Schaltbild einer solchen bekannten Anordnung ist in Figur 3 abgebildet. Hier wie auch in den Figuren 4 und 5 stellt eine gestrichelte Linie die Schnittstelle zwischen Akkupack 100 beziehungsweise Akkupackelektronik 800 und Handwerkzeugmaschine 300 beziehungsweise Ladegerät dar. In den Figu-ren 3 bis 5 ist die Verbindung zwischen der Elektronik des Akkupacks und der Elektronik der Handwerkzeugmaschine 300 als kontinuierliche Linie gekennzeichnet, die zwischen den Geräten angeordneten Kontaktelemente der akkupack- und maschinenseitigen Schnittstellen sind nicht dargestellt. Ebenfalls nicht dargestellt sind weitere Einzelheiten einer Akkupackelektronik, die dazu ausgelegt ist, einer Handwerkzeugmaschine 300 Informationen bezüglich des Akkupacks 100 über das zumindest eine Signalkontaktelement 143 bereitzustellen. Diese Informationen bezüglich des Akkupacks 100 sind zumindest teilweise in dem zumindest einen Kodierelement 141 hinterlegt, was im Folgenden noch detaillierter beschrieben werden wird.

In dem in Figur 3 dargestellten Beispiel ist das Kodierelement 141 ein Widerstand mit dem Widerstandswert Rc. Auf der Seite der Handwerkzeugmaschine 300 ist ein Pull-up Widerstand 341 gezeigt, über den das Kodierelement 141 mit Strom versorgt wird. In der dargestellten Ausführungsform liegt über den Pull-up Widerstand 341 und das Kodierelement 141 hinweg eine Versorgungsspannung Vcc an. Eine Messschaltung in der Handwerkzeugmaschine beziehungsweise im Ladegerät ermittelt nach Anlegen der Versorgungsspannung Vcc den mit dem Signalkontaktelement verbundenen Widerstand, der durch eine entsprechende Steuerung der Handwerkzeugmaschine beziehungsweise des Ladegerätes als akkupackspezifische Information interpretiert wird.

Wie eingangs beschrieben, ist diese Art der Informationsübergabe beschränkt, in der gezeigten Ausführungsform auf einen Widerstandswert.

Um diesen Nachteil zu beheben und gleichzeitig volle Kompatibilität und Funktionalität mit Geräten des Stands der Technik zu gewährleisten, wird erfindungsgemäß einerseits daran festgehalten, über die Akkupackelektronik 800 eine Messspannung an das zumindest eine Kodierelement 141 anzulegen. Wie in Figur 4b gezeigt, ist erfindungsgemäß darüber hinaus in der Akkupackelektronik 800 das Kodierelement 141 in einer elektrischen Parallelschaltung parallel zu einem dynamischen Strompfad verschaltet, was nun anhand der in Figur 4 gezeigten Ausführungsform der Erfindung beschrieben wird. In den Figuren 4 und 5 haben Merkmale, die bereits in Figur 3 beschrieben wurden, die gleichen Bezugszeichen wie in Figur 3.

In der Ausführungsform der Figur 4 umfasst der dynamische Strompfad zumindest einen ersten Widerstand 241 mit Widerstandswert Rx und einen ersten Kondensator 243 mit Kapazität Cx in Serienschaltung. Je nach Ausführungsform der Erfindung ist dabei der erste Widerstand 241 von der Schnittstelle her gesehen vor dem ersten Kondensator 243 (R-C-Serienschaltung) oder hinter dem ersten Kondensator (C-R-Serienschaltung) angeordnet, was hinsichtlich des hier erwünschten technischen Effektes keinen Unterschied macht.

In der Akkupackelektronik 800 sind also das Signalkontaktelement 143 und der dynamische Strompfad in einer elektrischen Parallelschaltung zwischen einem gemeinsamen Masseanschluss und dem Signalkontaktelement 143 geschaltet, was durch das entsprechende Massesymbol in der Figur angedeutet ist.

Wird nun eine Spannung Vcc an die in Figur 4b gezeigte Schaltung angelegt, so stellt sich bei zunächst völlig entladenem ersten Kondensator 243 elektrisch gesehen die in Figur 4a gezeigte Situation ein, in der die Spannung über den dynamischen Strompfad und den statischen Pfad, der das zeitlich nicht veränderliche Kodierelement 141 enthält, gemäß des Spannungsteilers bestehend aus dem Pull-up Widerstand 341 und der Parallelschaltung aus Rc und Rx aufgeteilt wird. Dies ist besonders vorteilhaft, da hierdurch sichergestellt werden kann, dass ohne signifikante zusätzliche Zeitverzögerung eine für die digitale Kommunikation zwischen dem Akkupack 100 und der Handwerkzeugmaschine 300 unter Umständen notwendige Schaltschwelle überschritten wird.

Der Fachmann erkennt, dass sich der Kondensator 234 bei Anlegen der Messspannung Vc in Abhängigkeit von seiner Kapazität Cx und dem Widerstand Rx des Kodierelements 141 mit der Zeitkonstante τ = Rx*Cx auf seinen Endwert auflädt. Ist dieser Endwert erreicht, fließt kein Strom mehr über den dynamischen Strompfad, und der stationäre Spannungswert entspricht dem Spannungsteiler bestehend aus dem Pull-up Widerstand 341 und dem Kodierelement 141, was in Figur 4c schematisch dargestellt ist. Elektrisch gesehen stellt sich das stationäre System damit genau so dar, als wäre der dynamische Strompfad nicht vorhanden.

Die Zeitkonstante τ = Rx*Cx ist in Ausführungsformen der Erfindung so ausgelegt, dass zum Zeitpunkt der stationären Messung des Kodierelements 141 der erste Kondensator 243 bereits ausreichend geladen ist und damit die Abweichung zum aus dem Stand der Technik bekannten, in Figur 3 gezeigten stationären System vernachlässigbar ist. Bevorzugterweise ist die Kapazität Cx des zumindest einen ersten Kondensators 243 und der Widerstandswert Rx des zumindest einen ersten Widerstands 241 derart gewählt, dass die Zeitkonstante τ = Rx*Cx des ersten dynamischen Strompfads einen Wert von τ <10ms, bevorzugterweise τ <1ms hat.

In dieser Ausführungsform ist der dynamische Strompfad also dazu eingerichtet, den zeitlichen Verlauf der Messspannung Vc nur innerhalb eines definierten Zeitraumes nach dem Verbinden des Akkupacks 100 mit der korrespondierenden Handwerkzeugmaschine 100 oder dem korrespondierenden Ladegerät 700 zu beeinflussen. Diese Beeinflussung des zeitlichen Verlaufs der Messspannung Vc kann durch eine entsprechend ausgebildete Steuerungseinheit einer Handwerkzeugmaschine 300 oder eines Ladegerätes erfasst und ausgewertet werden.

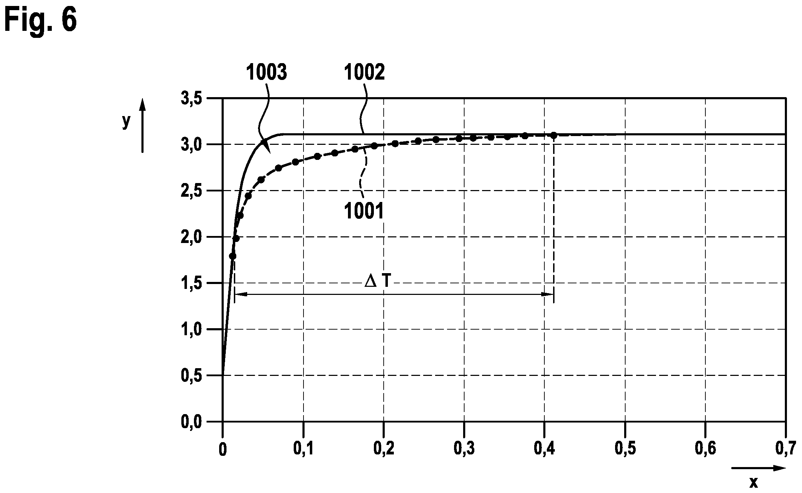

Zur Verdeutlichung dieses Umstands zeigt Figur 6 beispielhaft einen Zeitverlauf einer an dem Kodierelement 141 anliegenden Spannung Vc nach Anlegen der Versorgungsspannung Vcc wie im Zusammenhang mit Figur 4 erläutert. Auf der horizontalen x-Achse ist die Zeit aufgetragen, auf der y-Achse senkrecht dazu eine normierte Spannung an dem Kodierelement 141.

Dem Zeitverlauf, der mit einer mit Punkten versehenen Kurve 1001 gekennzeichnet ist, liegt eine Beispielkonfiguration der in Figur 4b gezeigten Schaltung zugrunde, umfassend Pull-up Widerstand 341, Kodierelement 141, sowie ersten Widerstand 241 und ersten Kondensator 243 in R-C-Schaltung. Die durchgehende, nicht weiter gekennzeichnete Kurve 1002 entspricht der gemäß dem Stand der Technik ausgeführten Schaltung ohne dynamischen Strompfad, mit ansonsten unveränderten Komponenten Pull-up Widerstand 341 und Kodierelement 141.

Der Fachmann erkennt den geringen Unterschied in der steigenden Flanke der Zeitverläufe 1001, 1002 unmittelbar nach Anlegen der Versorgungsspannung Vcc, sowie im stationären Zustand, bei dem sich die beiden Zeitverläufe 1001, 1002 wieder einander annähern. Der messbare Spannungsverlauf in einem Zeitfenster Δ_{T} dazwischen ist durch eine Abweichung der beiden Zeitverläufe 1001, 1002 in einem Bereich 1003 gekennzeichnet, die von den elektrischen Eigenschaften des dynamischen Strompfades beeinflusst ist und Rückschlüsse auf die Kapazität Cx und/oder den Widerstandswert Rx zulassen. Das Vorhandensein des beschriebenen Zeitverhaltens kann beispielsweise über einen Microcontroller der Handwerkzeugmaschine 300 oder des Ladegerätes überwacht werden, indem die Spannung am Kodierelement 141 während des Ladevorgangs der Schaltung gemessen wird. Darüber lassen sich beliebige 1-Bit-Informationen kodieren. Für erhöhte Informationstiefe kann zudem die Ausprägung des beschriebenen Zeitverhaltens bewertet werden.

Zum Schutz der Akkupackelektronik 800 vor elektrostatischer Entladung kann im Stand der Technik ein Schutzkondensator 145 oder eine Schutzdiode in einer elektrischen Parallelschaltung parallel zu dem zumindest einen Kodierelement 141 geschaltet sein, was in Figur 5b dargestellt ist. Figur 5b zeigt außerdem die erfindungsgemäße Weiterbildung dieser Schaltung mit einem dynamischen Strompfad, der wie in Figur 4b dargestellt den ersten Widerstand 241 mit Widerstandswert Rx und den ersten Kondensator 243 mit Kapazität Cx in Serienschaltung umfasst.

Wird eine Spannung Vcc an die in Figur 5b gezeigte Schaltung angelegt, so stellt sich bei zunächst völlig entladenem ersten Kondensator 243 und völlig entladenem Schutzkondensator 145 elektrisch gesehen die in Figur 5a gezeigte Situation ein, in welcher der Schutzkondensator 145 einen Kurzschluss zur Masse zulässt und durch den Stromfluss beginnt, sich aufzuladen.

Dieser Ladevorgang führt dazu, dass der Stromfluss am ersten Kondensator 241 unmittelbar nach dem Anlegen der Versorgungsspannung Vcc geich Null ist, und dass der erste Kondensator 241 erst mit steigender Aufladung des Schutzkondensators 145 mit der Aufladung beginnt. Bei voller Aufladung des Schutzkondensators 145 sowie des ersten Kondensators 241 stellt sich elektrisch gesehen das in Figur 5c gezeigte System ein, das identisch mit dem der Figur 4c ist.

In einer bevorzugten Ausführungsform zeichnet sich der dynamische Strompfad durch einen für den Akkupack typischen Kapazitätswert Cx und/oder Widerstandswert Rx aus, der bei Anlegen einer Versorgungsspannung aus einer Handwerkzeugsmaschine oder einem Ladegerät an dem Signalkontaktelement ein für diesen Akkupack typisches Zeitverhalten in der Messspannung über dem Kodierelement erzeugt, und dieses Zeitverhalten unterscheidbar ist von demjenigen Zeitverhalten anderer Akkupacks oder Akkupack-Typen, die sich beispielsweise durch dynamische Strompfade mit unterschiedlichen Kapazitätswerten Cx und/oder Widerstandswerten Rx auszeichnen oder keine dynamischen Strompfade enthalten.

In einer weiteren Ausführungsform umfasst die Akkupackelektronik 800 zwei oder mehr dynamische Strompfade, wobei jeder der mehreren dynamischen Strompfade in einer elektrischen Parallelschaltung parallel zu dem zumindest einen Kodierelement 141 verschaltet ist, und wobei jeder der mehreren dynamischen Strompfade mindestens einen ersten Widerstand 241 mit Widerstandswert Rx,i und mindestens einen Kondensator 243 mit Kapazität Cx,i in Serienschaltung aufweist. Wie in der vorstehend diskutierten Ausführungsform kann auf diese Weise eine grundsätzlich beliebige Anzahl an Bits kodieren.

Entsprechend der Erfindung ist es vorgesehen, dass die Akkupackelektronik 800 zwei oder mehrere dynamische Strompfade umfasst, wobei jeder der mehreren dynamischen Strompfade in einer elektrischen Parallelschaltung parallel zu dem zumindest einen Kodierelement 141 verschaltet ist, und wobei jeder der mehreren dynamischen Strompfade hinsichtlich seiner elektrischen Komponenten und seiner Verschaltung analog zu dem ersten dynamischen Strompfad aufgebaut ist.

Obwohl die Erfindung durch die bevorzugten Ausführungsbeispiele im Detail näher erläutert wurde, können vom Fachmann auch andere Kombinationen der genannten Merkmale vorgesehen sein, ohne den Schutzumfang der Erfindung zu verlassen.

## Patentansprüche

1. Akkupack (100) für eine Handwerkzeugmaschine (300), aufweisend
wenigstens eine Schnittstelle (180) zum Herstellen einer elektrischen Verbindung des Akkupacks (100) mit einer Handwerkzeugmaschine (300) und/oder einem Ladegerät, wobei die Schnittstelle (180) Kontaktelemente (140) zur elektrischen Kontaktierung korrespondierender Gegenkontaktelemente (340) an der Handwerkzeugmaschine (300) und/oder korrespondierender Gegenkontaktelemente an dem Ladegerät aufweist, wobei zumindest ein Kontaktelement (140) ein Signalkontaktelement (143) ist, welches mit zumindest einem Kodierelement (141) des Akkupacks (100) elektrisch verbunden ist;
eine Akkupackelektronik (800), die dazu ausgelegt ist, Informationen bezüglich des Akkupacks (100) über das zumindest eine Signalkontaktelement (143) bereitzustellen, wobei die Informationen bezüglich des Akkupacks (100) zumindest teilweise in dem zumindest einen Kodierelement (141) hinterlegt sind;
**dadurch gekennzeichnet, dass** die Akkupackelektronik (800) zwei oder mehr dynamische Strompfade umfasst, wobei jeder der zwei oder mehr dynamischen Strompfade in einer elektrischen Parallelschaltung parallel zu dem zumindest einen Kodierelement (141) verschaltet ist, und wobei jeder der zwei oder mehr dynamischen Strompfade hinsichtlich seiner elektrischen Komponenten und seiner Verschaltung analog zu dem ersten dynamischen Strompfad aufgebaut ist.

2. Akkupack (100) nach Anspruch 1, **dadurch gekennzeichnet, dass** die Akkupackelektronik (800) dazu eingerichtet ist, eine Versorgungsspannung (Vcc) über einen Vorwiderstand in einer Handwerkzeugmaschine oder in einem Ladegerät an das zumindest eine Kodierelement (141) weiterzugeben, und dass der dynamische Strompfad dazu eingerichtet ist, einen zeitlichen Verlauf einer Messspannung (Vc) über dem zumindest einen Kodierelement (141) zu beeinflussen.

3. Akkupack (100) nach Anspruch 2, **dadurch gekennzeichnet, dass** der dynamische Strompfad dazu eingerichtet ist, den zeitlichen Verlauf der Messspannung (Vc) über dem zumindest einen Kodierelement (141) nur innerhalb eines definierten Zeitraumes nach dem Anlegen der Versorgungsspannung (Vcc) aus der korrespondierenden Handwerkzeugmaschine (100) oder dem korrespondierenden Ladegerät (700) zu beeinflussen, wobei der definierte Zeitraum bevorzugterweise zwischen 0ms und 10ms liegt, besonders bevorzugterweise zwischen 0ms und 1ms.

4. Akkupack (100) nach einem der vorstehenden Ansprüche, **dadurch gekennzeichnet, dass** in der Akkupackelektronik (800) das Signalkontaktelement (143) und der dynamische Strompfad in einer elektrischen Parallelschaltung zwischen einem gemeinsamen Masseanschluss und dem Signalkontaktelement (143) geschaltet sind.

5. Akkupack (100) nach einem der vorstehenden Ansprüche, **dadurch gekennzeichnet, dass** der dynamische Strompfad zumindest einen ersten Kondensator (243) und einen ersten Widerstand (241) in Serienschaltung umfasst.

6. Akkupack (100) nach Anspruch 5, **dadurch gekennzeichnet, dass** eine Kapazität (Cx) des zumindest einen ersten Kondensators (243) und ein Widerstandswert (Rx) des zumindest einen ersten Widerstands (241) derart gewählt sind, dass eine Zeitkonstante τ = Rx*Cx des ersten Kondensators (241) einen Wert von τ <10ms, bevorzugterweise τ <1ms hat.

7. Akkupack (100) nach einem der Ansprüche 5 oder 6, **dadurch gekennzeichnet, dass** der dynamische Strompfad einen definierten Kapazitätswert Cx und/oder einen definierten Widerstandswert Rx aufweist, der bei Anlegen einer Versorgungsspannung (Vcc) aus einer Handwerkzeugsmaschine (300) oder Ladegerät (700) an dem Signalkontaktelement (143) ein definiertes Zeitverhalten in der Messspannung (Vc) über dem Kodierelement (141) erzeugt, wobei dieses Zeitverhalten unterscheidbar ist von demjenigen Zeitverhalten anderer Akkupacks oder Akkupack-Typen.

8. Akkupack (100) nach einem der Ansprüche 5 bis 7, **dadurch gekennzeichnet, dass** die Akkupackelektronik (800) zwei oder mehr dynamische Strompfade umfasst, wobei jeder der zwei oder mehr dynamischen Strompfade in einer elektrischen Parallelschaltung parallel zu dem zumindest einen Kodierelement (141) verschaltet ist, und wobei jeder der zwei oder mehr dynamischen Strompfade zumindest einen ersten Widerstand (241) mit Widerstandswert Rx,i und zumindest einen ersten Kondensator (243) mit Kapazität Cx,i in Serienschaltung aufweist, wobei jede Kombination der zwei oder mehr dynamischen Strompfade innerhalb zu unterscheidender Akkupacks (100, 100') ein unterscheidbares Zeitverhalten an der Schnittstelle zu der Handwerkzeugmaschine (300) und/oder dem Ladegerät erzeugt.

9. Akkupack (100) nach einem der vorstehenden Ansprüche, **dadurch gekennzeichnet, dass** ein Schutzkondensator (145) oder eine Schutzdiode in einer elektrischen Parallelschaltung parallel zu dem zumindest einen Kodierelement (141) geschaltet ist.

10. Akkupack (100) nach einem der vorstehenden Ansprüche, **dadurch gekennzeichnet, dass** das zumindest eine Kodierelement (141) ein Kodierwiderstand ist.

11. Akkupack (100) nach einem der vorstehenden Ansprüche, **dadurch gekennzeichnet, dass** das zumindest eine erste Kodierelement (141) ein ohmscher Widerstand ist, und ein Kodierwert des zumindest einen ersten Kodierelements (141) ein ohmsche Widerstandswert des ohmschen Widerstands ist.

12. Handwerkzeugmaschine (300), umfassend
ein Akkupack (100) nach einem der Ansprüche 1 bis 11;
eine Schnittstelle zur elektrischen Kopplung des Akkupacks (100) mit der Handwerkzeugmaschine (300), umfassend zumindest ein mit dem Signalkontaktelement (143) des Akkupacks (100) korrespondierendes Signalgegenkontaktelement;
und eine Steuerungseinheit, wobei die Steuerungseinheit dazu ausgebildet ist, Informationen bezüglich des Akkupacks (100) über das zumindest eine Signalgegenkontaktelement zu empfangen und einen zeitlichen Verlauf einer an dem zumindest einen Signalgegenkontaktelement anliegenden Messspannung (Vc) zu erfassen und auszuwerten.

13. Handwerkzeugmaschine (300) nach Anspruch 12, **dadurch gekennzeichnet, dass** ein Pull-up Widerstand (341) mit dem zumindest einen Signalgegenkontaktelement elektrisch verbunden ist.

14. Ladegerät zum Aufladen eines Akkupacks nach einem der Ansprüche 1 bis 11, umfassend eine Schnittstelle zur elektrischen Kopplung des Ladegeräts mit dem Akkupack (100), umfassend zumindest ein mit dem Signalkontaktelement (143) des Akkupacks (100) korrespondierendes Ladegegenkontaktelement;
eine Steuerungseinheit, wobei die Steuerungseinheit dazu ausgebildet ist, Informationen bezüglich des Akkupacks (100) über das zumindest eine Ladegegenkontaktelement zu empfangen und einen zeitlichen Verlauf einer an dem zumindest einen Ladegegenkontaktelement anliegenden Messspannung (Vc) zu erfassen und auszuwerten.

## Claims

1. Battery pack (100) for a hand-held power tool (300), having at least one interface (180) for establishing an electrical connection of the battery pack (100) to a hand-held power tool (300) and/or a charger, wherein the interface (180) has contact elements (140) for electrically contacting corresponding mating contact elements (340) on the hand-held power tool (300) and/or corresponding mating contact elements on the charger, wherein at least one contact element (140) is a signal contact element (143) that is electrically connected to at least one coding element (141) of the battery pack (100);
battery-pack electronics (800) that are designed to provide information relating to the battery pack (100) via the at least one signal contact element (143), wherein the information relating to the battery pack (100) is stored, at least in part, in the at least one coding element (141);
**characterized in that** the battery-pack electronics (800) comprise two or more dynamic current paths, wherein each of the two or more dynamic current paths is interconnected in an electrical parallel circuit in parallel with the at least one coding element (141), and wherein each of the two or more dynamic current paths is constructed, in respect of its electrical components and its interconnection, in a manner similar to the first dynamic current path.

2. Battery pack (100) according to Claim 1, **characterized in that** the battery-pack electronics (800) are configured to forward a supply voltage (Vcc) to the at least one coding element (141) via a series resistor in a hand-held power tool or in a charger, and **in that** the dynamic current path is configured to influence a time characteristic of a measurement voltage (Vc) across the at least one coding element (141).

3. Battery pack (100) according to Claim 2, **characterized in that** the dynamic current path is configured to influence the time characteristic of the measurement voltage (Vc) across the at least one coding element (141) only within a defined period of time after the supply voltage (Vcc) from the corresponding hand-held power tool (100) or the corresponding charger (700) is applied, wherein the defined period of time is preferably between 0 ms and 10 ms, particularly preferably between 0 ms and 1 ms.

4. Battery pack (100) according to one of the preceding claims, **characterized in that**, in the battery-pack electronics (800), the signal contact element (143) and the dynamic current path are connected in an electrical parallel circuit between a common ground terminal and the signal contact element (143).

5. Battery pack (100) according to one of the preceding claims, **characterized in that** the dynamic current path comprises at least one first capacitor (243) and one first resistor (241) connected in series.

6. Battery pack (100) according to Claim 5, **characterized in that** a capacitance (Cx) of the at least one first capacitor (243) and a resistance value (Rx) of the at least one first resistor (241) are selected in such a manner that a time constant _{T} = Rx*Cx of the first capacitor (241) has a value of _{T} <10 ms, preferably _{T}<1 ms.

7. Battery pack (100) according to either of Claims 5 and 6, **characterized in that** the dynamic current path has a defined capacitance value Cx and/or a defined resistance value Rx that, when a supply voltage (Vcc) from a hand-held power tool (300) or charger (700) is applied to the signal contact element (143), generate/generates a defined time response in the measurement voltage (Vc) across the coding element (141), wherein this time response is distinguishable from the time response of other battery packs or battery pack types.

8. Battery pack (100) according to one of Claims 5 to 7, **characterized in that** the battery-pack electronics (800) comprise two or more dynamic current paths, wherein each of the two or more dynamic current paths is interconnected in an electrical parallel circuit in parallel with the at least one coding element (141), and wherein each of the two or more dynamic current paths has at least one first resistor (241) of resistance value Rx,i and at least one first capacitor (243) of capacitance Cx,i connected in series, wherein any combination of the two or more dynamic current paths within battery packs (100, 100') to be distinguished generates a distinguishable time response at the interface with the hand-held power tool (300) and/or the charger.

9. Battery pack (100) according to one of the preceding claims, **characterized in that** there is a protective capacitor (145) or a protective diode connected in an electrical parallel circuit in parallel with the at least one coding element (141).

10. Battery pack (100) according to one of the preceding claims, **characterized in that** the at least one coding element (141) is a coding resistor.

11. Battery pack (100) according to one of the preceding claims, **characterized in that** the at least one first coding element (141) is an ohmic resistor, and a coding value of the at least one first coding element (141) is an ohmic resistance value of the ohmic resistor.

12. Hand-held power tool (300), comprising
a battery pack (100) according to one of Claims 1 to 11 ;
an interface for electrically coupling the battery pack (100) to the hand-held power tool (300), comprising at least one signal mating-contact element corresponding to the signal contact element (143) of the battery pack (100);
and a control unit, wherein the control unit is designed to receive information relating to the battery pack (100) via the at least one signal mating-contact element and to sense and evaluate a time characteristic of a measurement voltage (Vc) applied to the at least one signal mating-contact element.

13. Hand-held power tool (300) according to Claim 12, **characterized in that** there is a pull-up resistor (341) electrically connected to the at least one signal mating-contact element.

14. Charger for charging a battery pack according to one of Claims 1 to 11, comprising an interface for electrically coupling the charger to the battery pack (100), comprising at least one charging mating-contact element corresponding to the signal contact element (143) of the battery pack (100); and
a control unit, wherein the control unit is designed to receive information relating to the battery pack (100) via the at least one charging mating-contact element and to sense and evaluate a time characteristic of a measurement voltage (Vc) applied to the at least one charging mating-contact element.

## Revendications

1. Bloc-batterie rechargeable (100) pour un outil électrique portatif (300), comprenant au moins une interface (180) pour établir une connexion électrique du bloc-batterie rechargeable (100) avec un outil électrique portatif (300) et/ou un dispositif de charge, l'interface (180) comportant des éléments de contact (140) pour mettre en contact électrique des éléments de contact d'accouplement correspondants (340) sur l'outil électrique portatif (300) et/ou des contacts d'accouplement correspondants sur le dispositif de charge, au moins un élément de contact (140) étant un élément de contact de signal (143) qui est relié électriquement à au moins un élément codeur (141) du bloc-batterie rechargeable (100) ;
une électronique de bloc-batterie rechargeable (800) conçue pour fournir des informations concernant le bloc-batterie rechargeable (100) par l'intermédiaire dudit au moins un élément de contact de signal (143), lesdites informations concernant le bloc-batterie rechargeable (100) étant stockées, au moins en partie, dans ledit au moins un élément codeur (141) ;
**caractérisé en ce que** le bloc-batterie rechargeable (800) comprend deux trajets de courant dynamiques ou plus, chacun desdits deux trajets de courant dynamiques ou plus étant connecté, dans un circuit parallèle électrique, en parallèle avec ledit au moins un élément codeur (141), et chacun desdits deux trajets de courant dynamiques ou plus étant construit de manière analogue au premier trajet de courant dynamique en ce qui concerne ses composants électriques et son câblage.

2. Bloc-batterie rechargeable (100) selon la revendication 1, **caractérisé en ce que** l'électronique de bloc-batterie rechargeable (800) est conçue pour transmettre une tension d'alimentation (Vcc) par l'intermédiaire d'une résistance série dans un outil électrique portatif ou dans un dispositif de charge audit au moins un élément codeur (141), et **en ce que** le trajet de courant dynamique est conçu pour influencer une évolution temporelle d'une tension de mesure (Vc) aux bornes dudit au moins un élément codeur (141).

3. Bloc-batterie rechargeable (100) selon la revendication 2, **caractérisé en ce que** le trajet de courant dynamique est conçu pour influencer l'évolution temporelle de la tension de mesure (Vc) aux bornes dudit au moins un élément codeur (141) uniquement pendant une période définie après l'application de la tension d'alimentation (Vcc) provenant de l'outil électrique portatif correspondant (100) ou du dispositif de charge correspondant (700), ladite période définie étant de préférence comprise entre 0 ms et 10 ms, et de façon particulièrement préférée entre 0 ms et 1 ms.

4. Bloc-batterie rechargeable (100) selon l'une quelconque des revendications précédentes, **caractérisé en ce que**, dans l'électronique de bloc-batterie rechargeable (800), l'élément de contact de signal (143) et le trajet de courant dynamique sont connectés dans un circuit parallèle électrique entre une borne de masse commune et l'élément de contact de signal (143).

5. Bloc-batterie rechargeable (100) selon l'une quelconque des revendications précédentes, **caractérisé en ce que** le trajet de courant dynamique comprend au moins un premier condensateur (243) et une première résistance (241) connectés en série.

6. Bloc-batterie rechargeable (100) selon la revendication 5, **caractérisé en ce qu'**une capacité (Cx) dudit au moins un premier condensateur (243) et une valeur de résistance (Rx) de ladite au moins une première résistance (241) sont choisies de telle sorte qu'une constante de temps _{T} = Rx*Cx du premier condensateur (241) ait une valeur de _{T} < 10 ms, de préférence _{T} < 1 ms.

7. Bloc-batterie rechargeable (100) selon l'une quelconque des revendications 5 ou 6, **caractérisé en ce que** le trajet de courant dynamique présente une valeur de capacité définie Cx et/ou une valeur de résistance définie Rx, qui, lors de l'application d'une tension d'alimentation (Vcc) provenant d'un outil électrique portatif (300) ou d'un dispositif de charge (700) à l'élément de contact de signal (143), produit un comportement temporel défini dans la tension de mesure (Vc) aux bornes de l'élément codeur (141), ce comportement temporel pouvant être distingué de celui d'autres blocs-batteries rechargeables ou types de blocs-batteries rechargeables.

8. Bloc-batterie rechargeable (100) selon l'une quelconque des revendications 5 à 7, **caractérisé en ce que** l'électronique de bloc-batterie rechargeable (800) comprend deux trajets de courant dynamiques ou plus, chacun desdits deux trajets de courant dynamiques ou plus étant connecté, dans un circuit parallèle électrique, en parallèle avec ledit au moins un élément codeur (141), et chacun desdits deux trajets de courant dynamiques ou plus comprenant au moins une première résistance (241) ayant une valeur de résistance Rx,i et au moins un premier condensateur (243) ayant une capacité Cx,i connectés en série, chaque combinaison desdits deux trajets de courant dynamiques ou plus à l'intérieur de blocs-batteries rechargeables (100, 100') pouvant être distingués produisant un comportement temporel pouvant être distingué à l'interface avec l'outil électrique portatif (300) et/ou le dispositif de charge.

9. Bloc-batterie rechargeable (100) selon l'une quelconque des revendications précédentes, **caractérisé en ce qu'**un condensateur de protection (145) ou une diode de protection est connecté dans un circuit parallèle électrique, en parallèle avec ledit au moins un élément codeur (141).

10. Bloc-batterie rechargeable (100) selon l'une quelconque des revendications précédentes, **caractérisé en ce que** ledit au moins un élément codeur (141) est une résistance de codage.

11. Bloc-batterie rechargeable (100) selon l'une quelconque des revendications précédentes, **caractérisé en ce que** ledit au moins un premier élément codeur (141) est une résistance ohmique, et une valeur de codage dudit au moins un premier élément codeur (141) est une valeur de résistance ohmique de la résistance ohmique.

12. Outil électrique portatif (300), comprenant
un bloc-batterie rechargeable (100) selon l'une quelconque des revendications 1 à 11 ;
une interface pour l'accouplement électrique du bloc-batterie rechargeable (100) à l'outil électrique portatif (300), comprenant au moins un élément de contact d'accouplement de signal correspondant audit élément de contact de signal (143) du bloc-batterie rechargeable (100) ;
et une unité de commande, l'unité de commande étant conçue pour recevoir des informations concernant le bloc-batterie rechargeable (100) par l'intermédiaire dudit au moins un élément de contact d'accouplement de signal et pour détecter et évaluer une évolution temporelle d'une tension de mesure (Vc) appliquée audit au moins un élément de contact d'accouplement de signal.

13. Outil électrique portatif (300) selon la revendication 12, **caractérisé en ce qu'**une résistance d'excursion haute (341) est reliée électriquement audit au moins un élément de contact d'accouplement de signal.

14. Dispositif de charge pour charger un bloc-batterie rechargeable selon l'une quelconque des revendications 1 à 11, comprenant une interface pour l'accouplement électrique du dispositif de charge au bloc-batterie rechargeable (100), comprenant au moins un élément de contact d'accouplement de charge correspondant à l'élément de contact de signal (143) du bloc-batterie rechargeable (100) ;
une unité de commande, l'unité de commande étant conçue pour recevoir des informations concernant le bloc-batterie rechargeable (100) par l'intermédiaire dudit au moins un élément de contact d'accouplement de charge et pour détecter et évaluer une évolution temporelle d'une tension de mesure (Vc) appliquée audit au moins un élément de contact d'accouplement de charge.
